# EUROPÄISCHE PATENTSCHRIFT

(11) **EP 0 810 060 B1**
(45) Veröffentlichungstag und Bekanntmachung des Hinweises auf die Patenterteilung: **21.09.2005**
(21) Anmeldenummer: 97103304.8
(22) Anmeldetag: 28.02.1997
(51) Int. Cl.: B23Q 1/00, B23B 31/107

(54) **Kupplungsadapter**
Coupling adapter
Adapteur de couplage

(30) Priorität: 05.03.1996 DE 19608416
(43) Veröffentlichungstag der Anmeldung: 03.12.1997
(73) Patentinhaber: System 3R International AB, 162 26 Vällingby (SE)
(72) Erfinder: Nordquist, Hakan B., 183 43 Täby (SE)
(74) Vertreter: Zinngrebe, Horst

(56) Entgegenhaltungen:
- EP-B- 0 255 042
- DE-A- 1 777 257
- DE-A- 1 929 659
- DE-A- 3 527 105
- DE-A- 4 224 872
- DE-U- 9 310 325
- GB-A- 833 048
- PATENT ABSTRACTS OF JAPAN vol. 8, no. 249 (M-338), 15.November 1984 & JP 59 124539 A (SHINNIHON KOUKI KK), 18.Juli 1984,
- PATENT ABSTRACTS OF JAPAN vol. 13, no. 133 (M-809) [3481] , 4.April 1989 & JP 63 300862 A (MATSUURA KIKAI SEISAKUSHO K.K.), 8.Dezember 1988,

## Beschreibung

Die Erfindung betrifft einen Kupplungsadapter zum Anspannen eines Werkstücks oder Werkzeugs an ein mediumbetätigbares Spannfutter einer Werkzeugmaschine nach dem Oberbegriff des Patentanspruches 1, der aus EP-A-0 255 042 bekannt ist.

Es sind verschiedene Spannsysteme bekannt, die im einzelnen in den Dokumenten DE 26 46 051 C3 sowie EP 255 042 B1 beschrieben sind. Mit einem derartigen Spannsystem kann ein zu bearbeitendes Werkstück gegebenenfalls über einen Werkstückträger mit dem Spannfutter einer Werkzeugmaschine, insbesondere einer Elektroerodiermaschine mit außerordentlich hoher Präzision gekoppelt werden. Da das Werkstück, beispielsweise eine Elektrode, nach seiner Bearbeitung als Werkzeug verwendet werden kann, umfaßt der zur Beschreibung der vorliegenden Erfindung verwendete Begriff des Werkzeugs auch Werkstücke.

Die Auswahl des jeweils zu verwendenden Spannsystems richtet sich unter anderem nach der Bearbeitungsart oder auch dem Gewicht des Werkzeugs. Andererseits ist die Werkzeugmaschine mit einem vorgegebenen Spannsystem ausgerüstet, so daß sich der Wunsch nach einem Adapter genannten Übergangsstück ergibt, das den Übergang von dem maschinenseitigen Spannsystem zu dem dem Werkstück angepaßten Spannsystem ohne Genauigkeitsverlust bei der Positionierung erlaubt.

Der Betrieb moderner Werkzeugmaschinen ist mittels einer zentralen Steuereinrichtung numerisch gesteuert, die ein automatisches Anspannen und Lösen eines Adapters am Spannfutter der Werkzeugmaschine über einen Zugbolzen ermöglicht. Der Zugbolzen kann ein seitliches, einen Greifer einer automatischen Wechselvorrichtung angepaßtes Profil aufweisen, mittels welchem der Zugbolzen manipulierbar ist.

Der Erfindung liegt daher die Aufgabe zugrunde, die Bedienung des eingangs genannten Kupplungsadapter zu vereinfachen.

Dazu ist erfindungsgemäß ein Kupplungsadapter mit den Merkmalen des Patentanspruches 1 vorgesehen. Damit wird der erfindungsgemäße Kupplungsadapter einer numerischen Steuerung durch die zentrale Steuereinheit zugänglich, so daß das Anspannen eines Werkzeugs an den mit dem Spannfutter gekoppelten Kupplungsadapter sowie dessen Lösung automatisch durchführbar wird. Die Erfindung erweitert die Steuermöglichkeit der Werkzeugmaschine durch Bezugnahme auf eine zweite Referenzebene, die sich von der bisherigen Referenzebene nur durch eine Konstante unterscheidet, welche durch die vorgegebene Abmessung des Adapters in z-Richtung bestimmt ist.

In bevorzugter Ausgestaltung der Erfindung empfiehlt es sich, den Übergang des zweiten Mediumkanals vom Kupplungsadapter zum Spannfutter über ein Elementen-/Gegenelementen-Paar des ersten Spannsystems zu führen. Dieses Elementen-/Gegenelementen-Paar kann eines derjenigen Paare sein, die den Kupplungsadapter relativ zum Spannfutter in axialer Richtung (z-Richtung) eindeutig positionieren. Wenn in Weiterbildung der Erfindung das Werkzeug mit einem Zuganker gekoppelt ist, der in die Spannvorrichtung einführbar ist, empfiehlt es sich, daß der zweite Mediumkanal in eine Druckkammer des Kupplungsadapters mündet, in der ein elastisch beaufschlagter Kolben axial verschiebbar ist, wobei der Kolben den radialen Eingriff von Arretierelementen, beispielsweise Kugeln, in radiale Ausnehmungen des Zugankers steuert.

In weiterhin bevorzugter Ausgestaltung der Erfindung ist vorgesehen, daß an dem mit dem Zuganker koppelbaren Werkzeug eine Außenkontur ausgebildet ist, deren Abmessungen denjenigen des Profils zweckmäßig gleichen. Damit wird das Werkzeug der Manipulierbarkeit durch Greifer zugänglich, und zwar mit Vorteil durch Greifer mit gleicher Geometrie.

Sofern das erste und/oder das zweite Spannsystem Federelemente aufweist, empfiehlt sich eine Weiterbildung der Erfindung derart, daß diese Federelemente an der Oberseite und/oder der Unterseite des Kupplungsadapters ausgebildet sind.

Im übrigen sind vorteilhafte Ausführungen der Erfindung Gegenstand der Unteransprüche.

Die Erfindung wird nachstehend anhand des in der beigefügten Zeichnung dargestellten Ausführungsbeispiels im einzelnen beschrieben. Es zeigen:
- Fig. 1:: einen Axialschnitt durch einen Kupplungsadapter mit Zuganker und Zugbolzen;
- Fig. 2:: eine Draufsicht auf den Kupplungsadapter nach Fig. 1 nach Abnahme des Zugbolzens;
- Fig. 3:: eine schematische Darstellung eines Spannfutters mit angespanntem Zugbolzen;
- Fig. 4:: eine schematische perspektivische Ansicht des unteren Teils des Kupplungsadapters sowie des zugehörigen Werkzeugs.

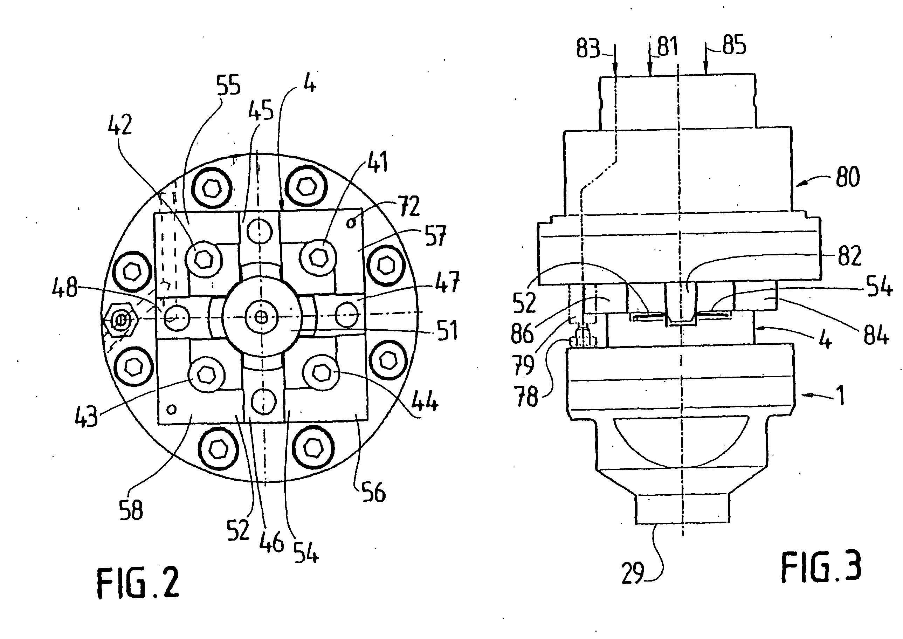

Der im Ganzen mit 1 bezeichnete Kupplungsadapter weist ein unteres, im wesentlich topfförmiges Gehäuseteil 2 auf, dessen obere Öffnung mit einem aufgeschraubten Dekkel 3 mit Ausnahme eines Zentralkanals 32 im Deckel 3 verschlossen ist. Auf die freie Oberseite des Deckels 3 ist ein Aufsatz 4 mittels mehrerer Schrauben 41, 42, 43, 44 aufgeschraubt. Der quaderförmige Aufsatz 4 weist an seiner Oberseite vier kreuzweise radial angeordnete Nuten 45, 46, 47, 48 auf, die in eine zentrale abgestufte kreisrunde, auf den Zentralkanal 32 ausgerichtete Durchgangsbohrung 51 im Aufsatz 4 münden. Zwischen je zwei benachbarten Nuten 45, 47, 46, 48 sind vier winkelige plangeschliffene und in einer Ebene liegende Oberflächenabschnitte 57, 56, 58, 55 definiert, die gemeinsam als z-Referenzfläche dienen. Jede der Nuten besitzt an ihrem Übergang zu den benachbarten Oberflächenabschnitten durch Hinterschnitte gebildete, einander gegenüberliegende Lipen als Elemente eines ersten Spannsystems, die anhand der Nut 46 mit 52, 54 bezeichnet sind. Das erste Spannsystem ist so ausgebildet, wie das in der erwähnten Schrift EP 255 042 B1 im einzelnen beschrieben ist. Dementsprechend weist das Spannfutter, das in Fig. 3 nur schematisch dargestellt und mit 80 bezeichnet ist, aus seiner Unterseite vorstehende Leisten auf, die in Anpassung an die Nuten 45, 46, 47, 48 kreuzweise angeordnet sind und wie beispielsweise die Leiste 82 beim Anspannen des Kupplungsadapters 1 an das Spannfutter 80 zwischen die axial elastischen Lippen 52, 54 eindringen und damit den Kupplungsadapter 1 in der zur z-Richtung senkrechten X- und Y-Richtung eindeutig positionieren. Ferner stehen aus der Unterseite des Spannfutters 80 vier Zapfen vor, von denen je einer auf einem der Oberflächenabschnitte 55, 56, 57, 58 zur Begrenzung des Spannwegs in z-Richtung als z-Referenz aufsitz, wie das in Fig. 3 anhand der Zapfen 84, 86 bezüglich der Oberflächenabschnitte 56, 58 dargestellt ist.

In einer Weise, wie das aus der genannten europäischen Schrift bekannt ist, ist in die Durchgangsbohrung 51 des Aufsatzes 4 ein Zugbolzen 7 eingesetzt, der in eine entsprechende Aufnahme des Spannfutters 80 eingeführt und dort mittels Druckluft zum Anspannen des Kupplungsadapters 1 an das Spannfutter 80 hineingezogen werden kann.

Aus der Unterseite des Deckels 3, die am Rand auf dem Gehäuseunterteil 2 aufliegt, erstreckt sich mittig ein einrohrförmiger Ansatz 31, welcher eine abgestufte, mit dem Zentralkanal 32 fluchtende Bohrung 39 aufweist und sich durch das Innere des Gehäuseteils 2 bis in eine zentrale Öffnung 23 im unteren Endabschnitt 21 des Gehäuseteils 2 erstreckt. Der von der Wand 22 des Gehäuseteils 2 und dem Ansatz 31 umschlossene Innenraum bildet somit eine ringförmige Zylinderkammer 24, in welcher ein Kolben 60 axial verschiebbar ist. Der Kolben 60 ist durch Ringdichtungen 61 bzw. 62 gegen einen zylindrischen Abschnitt der Innenfläche der Wand 22 bzw. die gegenüberliegende Außenwand des Ansatzes 31 abgedichtet. Zwischen der Oberseite des Kolbens 60 und der Unterseite des Deckels 3 verbleibt eine Kammer 25, in die ein Druckmediumkanal 72, in den Ansprüchen als zweiter Mediumkanal bezeichnet, mündet. Der Druckmediumkanal 72 durchsetzt den Deckel 3 sowie den Aufsatz 4 und mündet in den Oberflächenabschnitt 57 an einer Stelle, an der der dem Oberflächenabschnitt 57 zugeordnete Zapfen des Spannfutters 80 bei Anspannen des Kupplungsadapter 1 zur Auflage kommt. Wie aus der Schrift EP 255 042 B1 bekannt, durchdringt jeden der Zapfen ein Druckmediumkanal, der mit einer nicht dargestellter Druckmediumquelle verbunden ist. Der Einlaß des Druckmediums aus der Druckmediumquelle ist in Fig. 3 mit dem Pfeil 85 bezeichnet. Er steht mit dem Druckmediumkanal 72 bei an das Spannfutter 80 angespanntem Kupplungsadapter 1 in Verbindung.

Wird in den Druckmediumkanal 72 Druckmedium, beispielsweise Druckluft, eingespeist, kann der Kolben 60 dem in der Kammer 25 aufgebauten Druck gegen die Wirkung einer Feder 26, die sich auf einem Absatz 27 an der Innenseite der Wand 22 abstützt, nach unten ausweichen, und zwar höchstens soweit, bis die Unterseite 63 des Kolbens 60 an einer inneren Stufe 28 der Wand 22 zur Anlage kommt. Bei Anlage des Kolbens 60 an die Stufe 28 gelangt ein ringförmiger Ausschnitt 64 im Kolben 60 gegen radialen Öffnungen 34, 35 im Ansatz 31, in welchen Kugeln 36, 37 als Arretierelemente radial beweglich sind. Die Kugeln 36, 37 können dann in den Ausschnitt 64 radial ausweichen und den auswärts gerichteten Weg eines Zugankers 75' aus der Bohrung 39 und der Öffnung 23 nach unten freigeben.

Wird der Druckmediumkanal 72 drucklos gemacht, fährt der Kolben 60 unter Wirkung der Feder 26 nach oben, so daß die Kugeln 36, 37 vom Kolben 60 in den Öffnungen 34, 35 radial einwärts gedrängt werden und in die Bohrung 39 so vorstehen, daß sie einen Kragen 76' des Zugankers 75' unterfassen können.

Wird daher die Kammer 25 über den Mediumkanal 72 mit einem Druckluftimpuls beaufschlagt, kann der Zuganker 75' aus dem Kupplungsadapter 1 beispielsweise durch einen automatischen Greifer nach unten abgezogen werden. Andererseits wird der Zuganker 75' im Kupplungsadapter 1 durch die Druckfeder 26 gehalten, wenn die Kammer 25 drucklos ist. Es versteht sich, daß die Aufgabe eines Druckluftimpulses in die Kammer 25 durch die zentrale nicht dargestellte Steuerung der Werkzeugmaschine, an deren Pinole das Spannfutter 80 befestigt ist, gesteuert werden kann. Ferner sind in der praktischen Ausführung mehrere in Umfangsrichtung beabstandete Druckfedern 26 vorgesehen.

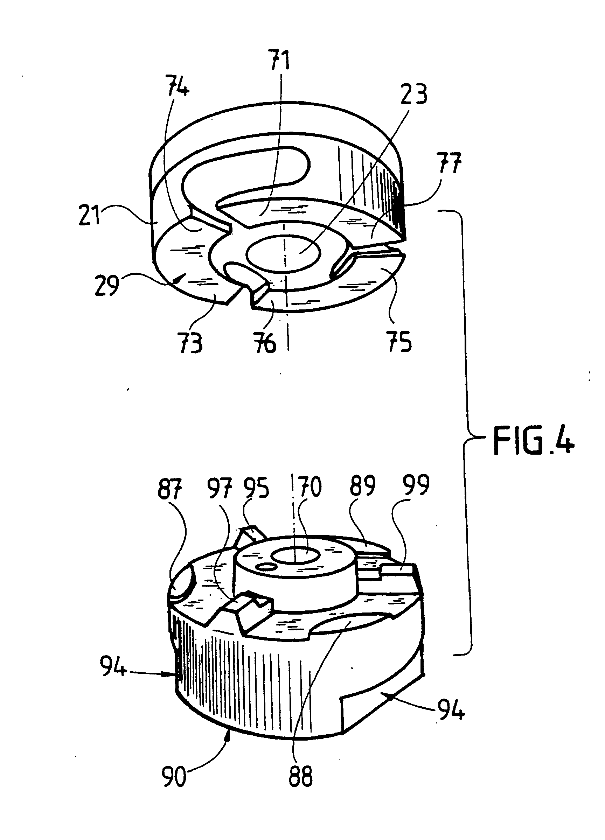

Der Zuganker 75' trägt ein Werkzeug 90, dessen neben dem Zuganker 75' befindlicher Oberflächenteil mit Elementen eines zweiten Spannsystems versehen ist. Entsprechend sind an der freien Stirnseite 29 des Kupplungsadapters 1 Gegenelemente des zweiten Spannsystems ausgebildet, die mit den Elementen am Werkzeug 90 beim Anspannen des Zugankers 75' zusammenwirken. Dieses zweite Spannsystem kann entweder dasjenige sein, das in der Schrift DE 26 46 951 C3 beschrieben ist, oder auch so gestaltet sein, wie das in Fig. 4 dargestellt ist. An der freien Stirnseite 29 sind drei im Umfangsrichtung gleich beabstandete Federzungen 71, 73, 75 durch entsprechende Hinterschnitte ausgebildet, die in Richtung der Achse 92 elastisch sind. Jede der Federzungen 71, 73, 75 endet mit vorgegebenem Abstand vor je einem festen Anschlag 74, 76, 77, wobei die Anschläge 74, 76, 77 in Umfangsrichtung ebenfalls gleich beabstandet sind. Somit verbleibt inzwischen jeder Federzunge 71, 73, 75 und dem zugehörigen, gegenüberliegenden Anschlag 74, 76, 77 ein Spalt, in welchen je eine von drei in Umfangsrichtung gleich beabstandeten konischen radialen Leisten 95, 97, 99 des Werkzeugs 90 eindringen kann. Die Leisten 95, 97, 99 haben in Umfangsrichtung gesehen eine Kammbreite, die kleiner ist als die Breite der erwähnten Spalte zwischen je einem Federzungen/Anschlagpaar und eine Basisbreite, die größer ist als die Breite der erwähnten Spalte. Wenn daher das Werkzeug 90 mittels des Zugankers 75', der in einer zentralen Bohrung 70 des Werkstücks 90 in nicht dargestellte Weise verankert ist, an den Kupplungsadapter 1 in der beschriebenen Weise angespannt wird, dringt je eine der Leisten 95, 97, 99 in je einen der Spalte zwischen einer der Federzungen 71, 73, 75 und dem jeweils gegenüberliegenden Anschlag 74, 76, 77 ein. Die Eindringtiefe in Richtung der Achse 92 ist dadurch begrenzt, daß auf der Oberseite des Werkzeugs 90 ausgebildete, in einer Ebene liegende Anschlagflächen 87, 88, 89 zur Anlage an die freie Stirnfläche 29 gelangen. Wie dargestellt sind die Anschlagflächen 87, 88, 89 in Umfangsrichtung gleich beabstandet und zwischen je zwei benachbarten Leisten 95, 97, 99 ist je eine Anschlagfläche 87, 88, 89 am Werkstück 90 ausgebildet.

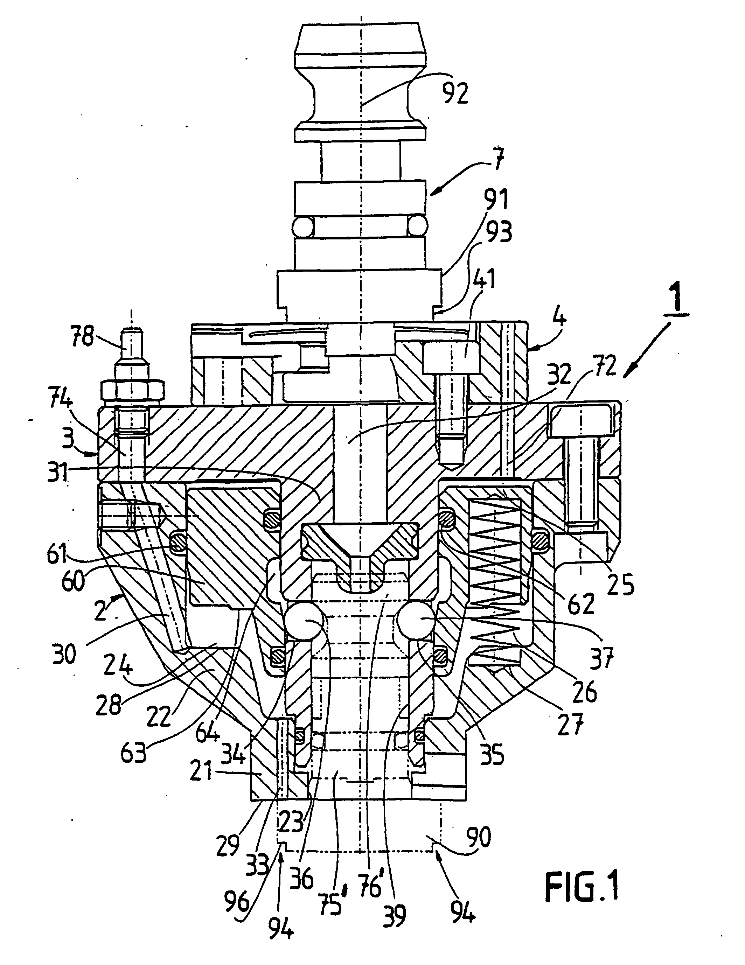

Aus Figur 1 ist zu erkennen, daß der Zuganker 75' zur Mittelachse 92 des Kupplungsadapters 1 fluchtend in letzteren eingesetzt werden kann und daher mit dem Zugbolzen 7 ebenfalls fluchtet.

Die quer zur Mittellinie 92 liegende freie Stirnfläche 29 bildet eine z-Referenz für das Anspannen des Werkzeugs 90. Durch den Endabschnitt 21 ist ein Druckluftkanal 33 gebohrt, der mit der Kammer 24 kommuniziert. In die Kammer 24 mündet ein weiterer Druckluftkanal 30, der durch den oberen Teil der Wand 22 geführt ist und sich in einen Druckluftkanal 74 im Deckel 3 fortsetzt. In das Ende des Druckluftkanals 74 ist ein Nippel 78 eingeschraubt, welcher mit einem Gegenstück 79 am Spannfutter 80 kommuniziert, wenn der Kupplungsadapter 1 an das Spannfutter 80 angespannt ist. Von dem Gegenstück 79 erstreckt sich ein Druckluftkanal durch das Spannfutter 80 bis zum Anschluß an die Druckluftquelle bei Pfeil 83. Wie Pfeil 83 andeutet, wird der Druckluftkanal 74 unter Steuerung der zentralen Steuereinheit aus einer Druckluftquelle mit Druckluft dann versorgt, wenn der Zuganker 75' mit Werkstück 90 in der beschriebenen Weise gegen den Kupplungsadapter 1 angespannt wird. Die demzufolge aus dem Druckluftkanal 74 über die Kammer 24 und den Druckluftkanal 33 anströmende Druckluft reinigt die Gegenreferenzfläche zur Referenzfläche 29 beim Anspannen.

Der Pfeil 81 bezeichnet den Anschluß der Druckmediumquelle an einen Druckluftkanal im Inneren des Spannfutters 80, der zum Lösen der Kopplung des Kupplungsadapters 1 mit dem Spannfutter 80 mit Druckluft beaufschlagt wird und in den Ansprüchen als erster Mediumkanal bezeichnet ist..

Der Zugbolzen 7 besitzt wie der aus EP 255042 B1 bekannte Zugbolzen einen Abschnitt 91, der nach Koppeln des Zugbolzens 7 mit dem Kupplungsadapter 1 und Einführen des Zugbolzens 7 in das Spannfutter 80 zwischen dem Spannfutter 80 und der Oberseite des Aufsatzes 4 freibleibt. An den Abschnitt 91 ist ein Profil 93 angeformt, welches dazu bestimmt ist, mit einem Gegenprofil an einem nicht dargestellten Greifer eines Manipulators, beispielsweise eines automatischen Werkzeugswechslers zusammenzuwirken. Im dargestellten Ausführungsbeispiel weist das Profil 93 zwei bezüglich der Mittellinie 92 gegenüberliegende radial einwärts sich erstreckende Schultern auf, die der Greifer unterfassen kann.

Das Werkzeug 90, dessen radial außerhalb des Zugankers 75' befindlicher Oberseitenteil mit den erwähnten Elementen des zweiten Spannsystems versehen ist, weist an der zum Kupplungsadapter 1 entfernt liegenden Oberseite eine Außenkontur 94 auf, welche beispielsweise aus zwei zur Achse 92 symmetrisch liegende radial einwärts sich erstreckenden Schultern 96 besteht. Die Abmessugen sowie die geometrische Form des Profils 93 sind diegleichen wie diejenigen der Außenkontur 94. Daher kann der erwähnte Greifer nach einem der Ausdehnung des Kupplungsadapters 1 in z-Richtung entsprechenden Versatz auch das Werkstück 90, an dessen Außenkontur 94 ergreifen und nach Beaufschlagung der Kammer 25 mit Druckluft über den Druckmediumkanal 72 den Zuganker 75' aus der Bohrung 39 herausziehen. Der erwähnte Versatz ist ein konstanter Maschinenparameter, der in der nicht dargestellten Steuereinrichtung abgespeichert werden kann. Daher kann die Steuereinrichtung entweder den Zugbolzen 7 oder den Zuganker 75' mit Werkstück 90 entsprechend dem eingegebenen Steuerprogramm von der Werkzeugmaschine lösen bzw. an die Werkzeugmaschine anspannen.

## Patentansprüche

1. Kupplungsadapter zum Anspannen eines Werkstücks oder Werkzeugs (90) an ein mediumbetätigbares Spannfutter (80) einer Werkzeugmaschine in wiederholbarer, eindeutiger raumlicher Lage mit hoher Repertiergenanigkeit relative zum Spannfutter, wobei das Spannfutter mit Referenzelementen (82) und das Werkzeug (90) oder Werkstück mit Gegenreferenzelementen (95,97,99) ausgerüstet sind, und eine Druckmediumquelle, die von einer zentralen Steuereinrichtung gesteuert ist über einen ersten in der Werkzeugmaschine vorgesehenen Mediumkanal (81) mit dem Spannfutter (80) verbunden ist, und wobei der Kupplungsadapter (1) an einer ersten Stimfläche mit ersten, mit den Referenzelementen (82) des Spannfutters (80) koppelbaren Gegenreferenzelementen (52, 54, 55, 56, 57, 58) zur Positionierung des Kupplungsadapters (1) relativ zum Spannfutter, versehen ist und Mittel zum mediumdruckabhängigen Anspannen an das Spannfutter (80) aufweist, **dadurch gekennzeichnet daß** der Kupplungsadapter (1) an einer zweiten Stirnfläche (29) mit zweiten Referenzelementen 71,73,74,75,76,77, die mit den Gegenreferenzelementen des Werkstückes oder Werkzeugs zwecks Positionierung des Werkstückes oder Werkzeugs relativ zum Kupplungsadapter (1) koppelbar sind versehen ist und eine Spannvorrichtung für das Werkstück oder Werkzeug aufweist, welche über einen zweiten Mediumkanal (72, 85), der sich durch den Kupplungsadapter (1) und das Spannfutter (80) erstreckt, mit der Druckmediumquelle verbindbar ist.

2. Kupplungsadapter nach Anspruch 1, **dadurch gekennzeichnet, daß** der Kupplungsadapter z-Gegenreferenzelemente und separate x/y-Gegeneferenzelemente aufweist.

3. Kupplungsadapter nach Anspruch 1 oder 2, **dadurch gekennzeichnet, daß** der Krupplungsadapter z-Referenzelemente und separate x/y-Referenzelemente aufweist.

4. Kupplungsadapter nach einem der vorstehenden Ansprüche, **dadurch gekennzeichnet, daß** das Werkzeug (90) mit einem Zuganker (75') gekoppelt ist, welcher in die Spannvorrichtung (60) einführbar ist.

5. Kupplungsadapter nach einem der vorstehenden Ansprüche, **dadurch gekennzeichnet, daß** die seitliche, aus dem Kupplungsadapter vorstehende Peripherie des Werkzeugs (90) mit einer Außenkontur (94) zum Eingriff eines automatischen Greifers versehen ist.

6. Kupplungsadapter nach Anspruch 5, **dadurch gekennzeichnet, daß** die Außenkontur (94) an dem zum Kupplungsadapter entfernten Teil des Werkzeugs ausgebildet ist.

7. Kupplungsadapter nach Anspruch 5 oder 6, **dadurch gekennzeichnet, daß** die Außenkontur (94) wenigstens zwei gegenüberliegende, radial einwärts weisende Schultern (96) aufweist.

8. Kupplungsadapter nach einem der vorstehenden Ansprüche, **dadurch gekennzeichnet, daß** ein Zugbolzen (7) zum Koppeln des Kupplungsadapters mit dem Spannfutter (80) vorgesehen ist mit einem aus dem Spannfutter und dem Kupplungsadapter vorstehenden Abschnitt (91), welcher ein Profil (93) zum Eingriff eines automatischen Greifers aufweist.

9. Kupplungsadapter nach Anspruch 8, **dadurch gekennzeichnet, daß** die Abmessungen der Außenkontur (94) gleich derjenigen des Profils (93) sind.

10. Kupplungsadapter nach einem der vorstehenden Ansprüche, **dadurch gekennzeichnet, daß** der Übergang des zweiten Mediumkanals (72) zum Spannfutter (80) über ein Referenzelementen/Gegenreferenzelementenpaar geführt ist.

11. Kupplungsadapter nach einem der vorstehenden Ansprüche, **dadurch gekennzeichnet, daß** der zweite Mediumkanal (72) in eine Druckkammer (25) des Kupplungsadapters mündet, die von einem elastisch beaufschlagten und axial verschiebbaren Kolben (60) begrenzt ist.

12. Kupplungsadapter nach einem der vorstehenden Ansprüche, **dadurch gekennzeichnet, daß** ein dritter Mediumkanal (33, 74) vorgesehen ist, der an einem zweiten Referenzelement mündet und sich durch den Kupplungsadapter sowie durch das Spannfutter (80) erstreckt.

13. Kupplungsadapter nach einem der Ansprüche 2 bis 12, **dadurch gekennzeichnet, daß** die x/y-Gegenreferenzelemente wenigstens teilweise axial elastisch sind.

## Claims

1. Coupling adapter for clamping a workpiece or tool (90) to a medium-actuatable chuck (80) of a machine tool in a repeatable, unique spatial position with high repeatability relative to the chuck, the chuck being equipped with reference elements (82) and the tool (90) or workpiece being equipped with counter-reference elements (95, 97, 99), and a pressure medium source which is controlled by a central control device being connected to the chuck (80) via a first medium channel (81) provided in the machine tool, and the coupling adapter (1) being provided on a first end face with first counter-reference elements (52, 54, 55, 56, 57, 58) which can be coupled to the reference elements (82) of the chuck (80), for positioning the coupling adapter (1) relative to the chuck, and having means for clamping to the chuck (80) as a function of the medium pressure, **characterized in that** the coupling adapter (1) is provided, on a second end face (29), with second reference elements (71, 73, 74, 75, 76, 77) which can be coupled to the counter-reference elements of the workpiece or tool for the purpose of positioning the workpiece or tool relative to the coupling adapter (1) and has a clamping device for the workpiece or tool, which device can be connected to the pressure medium source via a second medium channel (72, 85) which extends through the coupling adapter (1) and the chuck (80).

2. Coupling adapter according to Claim 1, **characterized in that** the coupling adapter has z-counter-reference elements and separate x/y-counter-reference elements.

3. Coupling adapter according to Claim 1 or 2, **characterized in that** the coupling adapter has z-reference elements and separate x/y-reference elements.

4. Coupling adapter according to any of the preceding claims, **characterized in that** the tool (90) is coupled to a tie rod (75') which can be introduced into the clamping device (60).

5. Coupling adapter according to any of the preceding claims, **characterized in that that** lateral periphery of the tool (90) which projects from the coupling adapter is provided with an outer contour (94) for engaging an automatic gripper.

6. Coupling adapter according to Claim 5, **characterized in that** the outer contour (94) is formed on that part of the tool which is remote from the coupling adapter.

7. Coupling adapter according to Claim 5 or 6, **characterized in that** the outer contour (94) has at least two opposite shoulders (96) pointing radially inwards.

8. Coupling adapter according to any of the preceding claims, **characterized in that** a tie bolt (7) for coupling the coupling adapter to the chuck (80) is provided, having a section (91) which projects from the chuck and the coupling adapter and which has a profile (93) for engaging an automatic gripper.

9. Coupling adapter according to Claim 8, **characterized in that** the dimensions of the outer contour (94) are the same as those of the profile (93).

10. Coupling adapter according to any of the preceding claims, **characterized in that** the transition from the second medium channel (72) to the chuck (80) is via a reference element/counter-reference element pair.

11. Coupling adapter according to any of the preceding claims, **characterized in that** the second medium channel (72) opens into a pressure chamber (25) of the coupling adapter, which chamber is bounded by an elastically actuated and axially displaceable piston (60).

12. Coupling adapter according to any of the preceding claims, **characterized in that** a third medium channel (33, 74) is provided, which joins a second reference element and extends through the coupling adapter and through the chuck (80).

13. Coupling adapter according to any of Claims 2 to 12, **characterized in that** the x/y-counter-reference elements are at least partly axially elastic.

## Revendications

1. Adaptateur de couplage destiné au serrage d'une pièce ou d'un outil (90) sur un mandrin de serrage (80) d'une machine-outil pouvant être actionné par fluide, dans une position spatiale définie pouvant être réitérée avec une haute précision de répétition par rapport au mandrin de serrage, le mandrin de serrage étant équipé d'éléments de référence (82) et l'outil (90) ou la pièce étant équipé d'éléments de référence antagonistes (95, 97, 98), et une source de fluide sous pression, qui est commandée par un dispositif de commande centrale, étant reliée au mandrin de serrage (80) par l'intermédiaire d'un premier canal de fluide (81) prévu dans la machine-outil, et l'adaptateur de couplage (1) étant pourvu, sur une première surface frontale, de premiers éléments de référence antagonistes (52, 54, 55, 56, 57, 58) pouvant être couplés aux éléments de référence (82) du mandrin de serrage (80) pour le positionnement de l'adaptateur de couplage (1) par rapport au mandrin de serrage, et comportant un moyen pour le serrage dépendant de la pression du fluide au niveau du mandrin de serrage (80), **caractérisé en ce que** l'adaptateur de couplage (1) est pourvu, sur une deuxième surface frontale (29), de deuxièmes éléments de référence (71, 73, 74, 75, 76, 77), qui peuvent être couplés aux éléments de référence antagonistes de la pièce ou de l'outil pour le positionnement de la pièce ou de l'outil par rapport à l'adaptateur de couplage (1), et comporte un dispositif de serrage pour la pièce ou l'outil, qui peut être relié à la source de fluide sous pression par l'intermédiaire d'un deuxième canal de fluide (72, 85) qui traverse l'adaptateur de couplage (1) et le mandrin de serrage (80).

2. Adaptateur de couplage selon la revendication 1, **caractérisé en ce que** l'adaptateur de couplage comporte des éléments de référence antagonistes z et des éléments de référence antagonistes x/y séparés.

3. Adaptateur de couplage selon la revendication 1 ou 2, **caractérisé en ce que** l'adaptateur de couplage comporte des éléments de référence z et des éléments de référence x/y séparés.

4. Adaptateur de couplage selon l'une des revendications précédentes, **caractérisé en ce que** l'outil (90) est couplé à un tirant d'ancrage (75') qui peut être inséré dans le dispositif de serrage (60).

5. Adaptateur de couplage selon l'une des revendications précédentes, **caractérisé en ce que** la périphérie latérale de l'outil (90) dépassant de l'adaptateur de couplage est pourvue d'un contour extérieur (94) pour l'engagement d'un preneur automatique.

6. Adaptateur de couplage selon la revendication 5, **caractérisé en ce que** le contour extérieur (94) est formé sur la partie de l'outil éloignée de l'adaptateur de couplage.

7. Adaptateur de couplage selon la revendication 5 ou 6, **caractérisé en ce que** le contour extérieur (94) comporte au moins deux épaulements (96) opposés orientés radialement vers l'intérieur.

8. Adaptateur de couplage selon l'une des revendications précédentes, **caractérisé en ce que**, pour le couplage de l'adaptateur de couplage au mandrin de serrage (80), il est prévu un boulon tirant (7) avec un tronçon (91) qui dépasse du mandrin de serrage et de l'adaptateur de couplage, tronçon qui comporte un profil (93) pour l'engagement d'un preneur automatique.

9. Adaptateur de couplage selon la revendication 8, **caractérisé en ce que** les dimensions du contour extérieur (94) sont identiques à celles du profil (93).

10. Adaptateur de couplage selon l'une des revendications précédentes, **caractérisé en ce que** la transition entre le deuxième canal de fluide (72) et le mandrin de serrage (80) est guidée par l'intermédiaire d'un couple éléments de référence/éléments de référence antagonistes.

11. Adaptateur de couplage selon l'une des revendications précédentes, **caractérisé en ce que** le deuxième canal de fluide (72) débouche dans une chambre de pression (25) de l'adaptateur de couplage, qui est délimitée par un piston (60) soumis à une charge élastique et pouvant se déplacer axialement.

12. Adaptateur de couplage selon l'une des revendications précédentes, **caractérisé en ce qu'**il est prévu un troisième canal de fluide (33, 74), qui débouche au niveau d'un deuxième élément de référence, et qui s'étend à travers l'adaptateur de couplage ainsi qu'à travers le mandrin de serrage (80).

13. Adaptateur de couplage selon l'une des revendications 2 à 12, **caractérisé en ce que** les éléments de référence antagonistes x/y sont axialement élastiques, au moins partiellement.
